# EUROPÄISCHE PATENTANMELDUNG

(11) **EP 4 125 259 A1**
(43) Veröffentlichungstag der Anmeldung: **01.02.2023**
(21) Anmeldenummer: 21188698.1
(22) Anmeldetag: 30.07.2021
(51) Int. Cl.: H04L 67/12, H04W 4/50, H04W 4/18, H04W 4/70, H04W 28/02, G05B 19/418

(54) **VERFAHREN, VORRICHTUNG, COMPUTERPROGRAMMPRODUKT UND COMPUTERLESBARES SPEICHERMEDIUM FÜR DEN SICHEREN BETRIEB EINER INDUSTRIELLEN ANLAGE**

(71) Anmelder: Siemens Aktiengesellschaft, 80333 München (DE)
(72) Erfinder: Bahr, Michael, 81827 München (DE); Falk, Dr. Rainer, 85586 Poing (DE); Fries, Steffen, 85598 Baldham (DE); Walewski, Dr. Joachim, 82008 Unterhaching (DE)

(57) **Zusammenfassung**

Die Erfindung betrifft ein Verfahren und ein erstes Gerät für einen sicheren Betrieb eines ersten Geräts in einer industrielle Anlage, bei dem eine reale Übertragungsqualität ermittelt wird, die bei einer Übertragung von zumindest einem drahtlosen Signal vorliegt oder zu erwarten ist, bei dem ein Wertebereich für zumindest eine benötigte Übertragungsqualität bei einer Übertragung des zumindest einen drahtlosen Signals ermittelt wird, wobei die zumindest eine benötigte Übertragungsqualität bei der Übertragung des zumindest einen drahtlosen Signals vorliegen muss, damit das erste Gerät eine Aufgabe basierend auf einer Information, die durch das zumindest eine drahtlose Signal übermittelt wird, zuverlässig ausführen kann, bei dem die Aufgabe basierend auf der Information ausgeführt wird, falls die reale Übertragungsqualität innerhalb des Wertbereichs liegt und bei dem die Ersatzaufgabe ausgeführt wird, falls die reale Übertragungsqualität außerhalb des Wertbereichs liegt.

## Beschreibung

Die Erfindung betrifft ein Verfahren und ein erstes Gerät für einen sicheren Betrieb in einer industriellen Anlage.

Für einen operativen Betrieb von industriellen Anlagen, wie beispielsweise eine Produktionsanlage für Flaschen, gewinnen drahtlose Kommunikationsverbindungen mehr und mehr an Bedeutung. Die Entwickler des 5G Standards haben Anforderungen an die Kommunikationsverbindungen einer industriellen Anlage bereits bei dem Design des 5G Standards berücksichtigt, wie beispielsweise geringe Latenzzeiten.

Daher ist zu erwarten, dass bei einer Planung und einem Engineering einer industriellen Anlage eine Kommunikation, z.B. zur Übertragung einer Steuerungs- und Überwachungskommunikation der industriellen Anlage, über drahtlose Kommunikationsverbindungen vorgesehen wird. Dies hat unter Anderem neben Einsparung von Kosten für eine Installation von Kabeln den großen Vorteil, dass industrielle Anlagen dynamisch rekonfiguriert werden können, wie beispielsweise bei cyber-physical Systemen.

Jedoch kann eine drahtlose Kommunikationsverbindung auch Qualitätsschwankungen unterworfen sein, sodass eine Funktionalität der industriellen Anlage gefährdet sein kann.

Ein Gremium 3GPP (3GPP - 3rd Generation Partnership Project) erarbeitet technische Spezifikationen, die eine Implementierung des 5G Standards für nicht-öffentliche 5G-Mobilfunknetze, wie beispielsweise zur Anwendung in einer industriellen Anlage, unterstützen sollen, siehe [1, 2].

Es ist daher Aufgabe der vorliegenden Erfindung Verfahren und Vorrichtungen anzugeben, die die Funktionalität einer industriellen Anlage bei Nutzung von drahtlosen Kommunikationsverbindungen verlässlich sicherstellt.

Diese Aufgabe wir durch die Merkmale der unabhängigen Ansprüche gelöst. Weiterbildungen der Erfindung sind den Unteransprüchen zu entnehmen.

Die Erfindung betrifft ein Verfahren für einen sicheren Betrieb eines ersten Geräts in einer industriellen Anlage, mit folgenden Schritten:
- Ermitteln einer realen Übertragungsqualität, die bei einer Übertragung von zumindest einem drahtlosen Signal vorliegt oder zu erwarten ist;
- Bereitstellen eines Wertebereichs für zumindest eine benötigte Übertragungsqualität bei einer Übertragung des zumindest einen drahtlosen Signals, wobei die zumindest eine benötigte Übertragungsqualität bei der Übertragung des zumindest einen drahtlosen Signals vorliegen muss, damit das erste Gerät eine Aufgabe basierend auf einer Information, die durch das zumindest eine drahtlose Signal übermittelt wird, zuverlässig ausführen kann;
- Ausführen der Aufgabe basierend auf der Information, falls die reale Übertragungsqualität innerhalb des Wertbereichs liegt;
- Ausführen einer Ersatzaufgabe, falls die reale Übertragungsqualität außerhalb des Wertbereichs liegt.

Durch dieses Verfahren wird sowohl ein sicherer Betrieb des ersten Geräts als auch der industriellen Anlage ermöglicht. Durch die Ersatzaufgabe, die der Aufgabe des Geräts angepasst sein kann, wird ermöglicht, dass eine potenzielle Fehlfunktion, die durch das Ausführen der Aufgabe bei Vorliegen eines Werts des drahtlosen Signals, der sich außerhalb des Wertbereichs befindet, vermieden werden kann. Insbesondere ist vorteilhaft, dass dabei der Wertebereich den erwarteten Bereich für die reale Übertragungsqualität anzeigt, der beispielsweis bei einer Projektierung und/oder Inbetriebnahme der industriellen Anlage eingestellt und/oder erwartet wird. Selbst wenn die reale Übertragungsqualität derart vorliegen würde, dass die Übertragung des drahtlosen Signals einwandfrei, z.B. fehlerfrei, durchgeführt werden könnte, kann bei Vorliegen der realen Übertragungsqualität außerhalb des Wertebereichs eine Manipulation und/oder eine geänderte Konfiguration der Geräte der industriellen Anlage vorliegen. Somit kann durch das Verfahren auch eine Manipulation zumindest eines Teils der industriellen Anlage erkannt und in diesem Fall ein sicherer Betrieb des ersten Geräts bzw. der industriellen Anlage unterstützt bzw. gewährleistet werden.

Das zumindest eine drahtlose Signal kann durch das erste Gerät empfangen oder durch das erste Gerät gesendet werden. Hierdurch ist das Verfahren für eine Vielzahl von Applikationen einsetzbar.

Unter dem Begriff "industrielle Anlage" wird ein Zusammenschluss mehrerer Geräte verstanden, die zusammen eine technische Aufgabe bewältigen, wie das Fertigen eines Produkts, das Überwachen eines Gebäudezustands, bspw. um Feuer zu erkennen, oder das Sichern eines Streckenabschnitts einer Eisenbahnstrecke. Ein Dokument [3] zeigt diverse Beispiele für industrielle Anlagen, die in dem Dokument als Anlagentyp bezeichnet werden.

Die Geräte sind dabei Einheiten, die zum Bewältigen zumindest eines Teils der technischen Aufgabe mit einer eigenen (technischen) Aufgabe bzw. Ersatzaufgabe beitragen, wie beispielsweise in Gestalt eines Förderbands, einer Fräsmaschine, eines in einer Cloud ausgeführten Regelungsalgorithmuses für das Steuern eines oder mehrerer der Geräte oder eines Transportroboters zum Bestücken von Fertigungsautomaten mit Werkzeug und/oder Material. Der Teil der technischen Aufgabe der industriellen Anlage, die das jeweilige Gerät bewältigt, wird als Aufgabe bzw. Ersatzaufgabe im Folgenden bezeichnet.

Die industrielle Anlage muss zu jedem Zeitpunkt sicher arbeiten. Dazu müssen auch die jeweiligen Geräte jeweils einen sicheren Betrieb gewährleisten. Daher wird im Rahmen der Anmeldung unter einem "sicheren Betrieb" des (ersten) Geräts verstanden, dass dieses im Zusammenspiel mit weiteren Geräten keine Fehlfunktionen in einem Bearbeiten der Aufgabe der industriellen Anlage hervorruft. So sollte bei einem Ausfall eines der Geräte von mit dem ausgefallenen Gerät in Zusammenspiel stehenden Geräten dieser Ausfall erkannt werden, so dass diese Geräte dann in einen vordefinierten, also sicheren, Betriebszustand gehen können, beispielsweise einen Wartezustand, also die Ersatzaufgabe ausführen. Im Umkehrschluss wäre ein unsicherer Betrieb des (ersten) Geräts gegeben, falls dem Gerät Produktionsmittel, wie beispielweise Steuerdaten zum Lenken eines Fräskopfs, fehlen, während das Gerät sich zwischen zwei Betriebszuständen des Fräsvorgangs befindet. So führt beispielweise das erste Geräte basierend auf Steuerdaten, die von einem zweiten Gerät, das in der Cloud liegt und von dort die Steuerdaten in Echtzeit an das erste Gerät überträgt, eine Oberflächenbearbeitung an einem Stahlblock aus. Die Betriebszustände "Start des Fräsvorgangs" und "Ende des Fräsvorgangs" beschreiben den Anfang und das Ende des Fräsvorgangs, wobei der Betriebszustand "Ende des Fräsvorgangs" einen sicheren Betriebszustand repräsentiert, der das erste Gerät und somit die industrielle Anlage in einen sicheren Betrieb versetzen. Fehlen zwischen diesen beiden Betriebszuständen Steuerdaten des zweiten Geräts, weil z.B. eine Datenübertragung gestört ist, so könnten an dem Produkt und an dem Fräswerkzeug erhebliche Schäden entstehen. Somit wäre in diesem Fall das erste Gerät in keinem sicheren Betrieb.

Somit wird unter "sicherer Betrieb" ein Betriebszustand und/oder ein Betrieb des Geräts verstanden, der das (erste) Gerät selbst - ggfs. auch im Zusammenspiel mit einem oder mehreren der Geräte - und hierdurch auch die industrielle Anlage in einen sicheren Betrieb versetzt. Im obigen Beispiel wäre der Betriebszustand "Ende des Fräsvorgangs" ein derartiger sicherer Betriebszustand, weil die Fräsmaschine in diesem Betriebszustand warten kann, ohne selbst Schaden zu nehmen. Andere Geräte, wie ein Roboter, der das bearbeitete Produkt von der Fräsmaschine abnehmen und zum nächsten Gerät transportieren möchte, kann ebenfalls in einen sicheren Betriebszustand "Warten" gehen. Somit können alle Geräte sichere Betriebszustände einnehmen, um das erste Gerät und somit auch die industrielle Anlage in einen sicheren Betrieb zu versetzen. Ferner kann als "sicherer Betrieb" auch ein Ausführen einer Ersatzaufgabe verstanden werden, die es dem ersten Gerät ermöglicht nach Abschluss der Ersatzaufgabe die Aufgabe sicher durchzuführen, wie beispielsweise nach Änderung seiner geographischen Position.

Unter der Passage "das erste Gerät seine Aufgabe zuverlässig ausführen" wird verstanden, dass das drahtlose Signal vom ersten Gerät empfangen und/oder von einem Kommunikationspartner des ersten Geräts derart empfangen wird, dass das erste Gerät seine Aufgabe basierend auf dem drahtlosen Signal derart umsetzen kann, wie dies zur Projektierung der industriellen Anlage und somit auch zur Projektierung der Ausführung der Aufgabe des ersten Geräts geplant wurde. Anders gesagt muss die drahtlose Kommunikation zwischen dem ersten Gerät und seinem Kommunikationspartner derart von statten gehen, dass das erste Gerät sich immer in einem sicheren Betriebszustand befindet, also die benötigten Steuerparameter rechtzeitig vorliegen oder Anweisungen für eine nachfolgende Aufgabe eines anderen Geräts dieses Gerät rechtzeitig erreichen. Gerade in der Prozessindustrie sind exakte Signalläufe essenziell für den sicheren Betrieb der industriellen Anlage, sodass ein Fachmann auf dem Gebiet der Prozessindustrie mit zuverlässiger Ausführung von Aufgaben durch die Geräte vertraut ist.

Unter einem Begriff "Übertragungsqualität" werden im Rahmen dieser Anmeldung eine oder mehrere Eigenschaften einer drahtlosen Kommunikationsverbindung verstanden, die insbesondere im realen Betrieb auftreten. Diese können Abschattung des Funksignals, Laufzeiten, Bandbreiten, periodische und/oder dynamische Störungen und ähnliches charakterisieren. Die Übertragungsqualität kann somit einen oder mehrere Parameter - also mehrere Dimensionen - aufweisen. Bei einem Vergleich der ersten Übertragungsqualität mit einer zweiten Übertragungsqualität werden konkrete Werte für identische Parameter beider Übertragungsqualitäten verglichen - also die korrespondierende Dimension. Besser ist die erste Übertragungsqualität gegenüber der zweiten Übertragungsqualität, wenn in jeder betrachteten Dimension der jeweilige Wert zu einer besseren bzw. performanteren Übertragung des drahtlosen Signals beiträgt, wie bspw. eine höhere Bandbreite, geringerer Jitter, geringere Störeinflüsse oder geringere Latenzzeiten (Übertragungsverzögerung). Ferner kann die bessere Übertragung auch durch eine Trägerfrequenzwahl derart ausgestaltet sein, dass niedrigere Trägerfrequenzen bei einer vorgegebenen Leistung eine größere Reichweite haben und ggfs. durch Objekte weniger leicht gestört werden. Auch kann eine bessere Übertragung durch eine höhere Übertragungsbandbreite, durch die Verwendung redundanter Übertragungswege oder durch die Auswahl geeigneter Modulationsverfahren erreicht werden. Die Übertragungsqualität wird durch Messwerte, auch Werte genannt, repräsentiert. In dieser Beschreibung kann der Begriff Übertragungsqualität und die Formulierung Wert bzw. Werte einer Übertragungsqualität gleichbedeutend verwendet werden, da die Übertagungsqualität durch Werte repräsentiert wird. Ein Fachmann im Bereich Mobilfunk und/oder Hochfrequenztechnik kann die Übertragungsqualität durch die genannten und weiteren Parametern festlegen.

Im Rahmen der Beschreibung wird der Begriff "Wertebereich" dahingehend verstanden, dass für einen oder mehrere Parameter der benötigten Übertragungsqualität ein oder mehrere konkrete Werte angegeben werden. So wird für den Parameter Latenzzeit ein Wertebereich von 200ms bis 500ms definiert, beispielsweise durch Angabe eines Parameterpaares {200-500}. Ferner kann der Wertebereich eines der Parameter auch durch mehrere Teilbereiche definiert sein, wie beispielsweise für die Latenzzeit zwischen 200ms und 300ms und zwischen 400ms und 500ms, also {200-300; 400-500}. Auch ein einzelner Wert kann für den Wertebereich eines Parameters angegeben werden, wie beispielsweise für den Fall, dass mehrere Frequenzen für die Übertragung des drahtlosen Signals technisch möglich sind, aber nur eine davon zulässig ist. Hierzu wäre dann für die Trägerfrequenz 2.4000MHz die Angabe des Wertebereichs {2,4000}. Bei Angabe mehrerer Parameter für die Übertragungsqualität kann der Wertebereich pro Parameter auch zumindest eine Dimension aufweisen. Beispielsweise sollen für die Parameter Latenzzeit ein Bereich von 300ms bis 400ms und für eine Signalstäke ein Bereich von 75dBm bis 82dBm angegeben werden. Der Wertebereich kann dann folgendermaßen dargestellt sein: {{300ms-400ms}; {75dBm-82dBm}}, wobei der Wertebereich eine Zusatzangabe aufweist, damit die jeweiligen Bereiche den zugehörigen Parametern zuordenbar sind. Eine Angabe "innerhalb des Wertebereichs" bedeutet, dass Werte der Parameter der realen Übertragungsqualität alle innerhalb der Bereiche der Parameter des Wertebereich liegen, wobei innerhalb hierbei auch bedeuten kann, dass der im Bereich eines Parameters angegebene Werte dem Wert des Parameters der realen Übertragungsqualität entspricht. Das bedeutet, dass der Begriff "innerhalb" ein oder mehrere Werte am Rand des jeweiligen Bereichs miteinschließt. Somit repräsentiert der Wertebereich einen Netzwerk-Fingerprint für das drahtlose Signal, insbesondere als Netzwerk-Fingerprint für eine jeweilige Funkzelle.

Unter einem Begriff Aufgabe bzw. Ersatzaufgabe wird im Rahmen der Anmeldung verstanden, dass das Gerät zumindest eine Aktivität, wie beispielsweise Fräsen, oder ein Übertragen oder Empfangen von Betriebsparametern durchführt, welche eine bestimmte Anforderung an die erste Übertragungsqualität erfordert, wie beispielsweise bei Empfang von Steuerdaten zum Steuern des Fräskopfs eine maximal zulässige Latenzzeit oder einen mindestens benötigten Datendurchsatz pro Sekunde. Diese Anforderungen bestehen dann für einen vorgebbaren Zeitraum, wie beispielsweise während des 45 Sekunden Fräsvorgangs.

In einer vorteilhaften Weiterbildung der Erfindung werden die reale Übertragungsqualität und die benötigte Übertragungsqualität abhängig von zumindest einem der folgenden Parameter gebildet:
- Datendurchsatz bei der Übertragung der Information;
- Übertragungsverzögerung zur Übertragung der Information;
- Jitter bei der Übertragung der Information;
- Signalstärke, Signalform oder Frequenzspektrum des drahtlosen Signals, welches bei einem Empfänger, insbesondere bei dem ersten Gerät oder bei dem Kommunikationspartner des ersten Geräts, vorliegt;
- Störsignalanteil, insbesondere charakterisiert durch seine Signalstärke, Frequenzband und/oder zeitliche und spektrale Ausformung.

Jede dieser Weiterbildungen ist vorteilhaft, weil die jeweiligen Parameter in einfacher und kostengünstiger - ggfs. auch standardisierter - Art und Weise ermittelt und dem Verfahren zugrunde gelegt werden können.

In einer weiteren vorteilhaften Ausgestaltung der Erfindung kann die reale Übertragungsqualität für ein Gebiet ermittelt werden und/oder die zumindest eine benötigte Übertragungsqualität für ein Gebiet bereitgestellt werden.

Hierdurch kann eine Vereinfachung bei der Ausführung des Verfahrens erreicht werden. Zu einem müssen für wenige Gebiet, die durch die industrielle Anlage abgedeckt werden, die jeweiligen Qualitäten ermittelt, bereitgestellt, gespeichert und/oder verarbeitet werden, als bei einer Ortskoordinatengenauen Angabe. Damit kann das Verfahren auch auf einer weniger leistungsfähigen Hardware und somit kostengünstiger betrieben werden.

In einer verzugsweisen Weiterbildung der Erfindung wird das Ermitteln der realen Übertragungsqualität durch zumindest eine der folgenden Schritte durchgeführt:
- durch eine Messung des ersten Geräts an seinem aktuellen Standort;
- durch Abfragen der realen Übertragungsqualität an einem vorgebbaren Standort oder in einem Bereich eines vorgebbaren Standorts aus einer Datenbank;
- durch Abfragen der realen Übertragungsqualität eines Kommunikationspartners des ersten Geräts;
- durch eine Messung des ersten Geräts (G1) in einem Segment eines Funkzelle.

Diese Weiterbildung ermöglicht das erfindungsgemäße Verfahren in einer Vielzahl von verschiedenen Anwendungsszenarien einzusetzen. So ist beispielsweise für eine stationäre Maschine eine Messung an seinem aktuellen Standort ausschlaggebend für eine reale Übertragungsqualität zur Übertragung des drahtlosen Signals. Ist das erste Gerät beispielsweise ein Transportroboter so kann dieser vor einem Wechsel von einem Standort bzw. Bereich in einen neuen Standort bzw. neuen Bereich die an dem neuen Standort bzw. neuen Bereich zu erwartende reale Übertragungsqualität durch Abfragen aus einer Datenbank abschätzen bzw. bestimmen, sodass der Transportroboter in Abhängigkeit von der Abfrage seinen weiteren Fahrweg bestimmen kann. Auch das Abfragen der realen Übertragungsqualität eines Kommunikationspartners des ersten Geräts kann für den sicheren Betrieb des ersten Geräts dahingehend essenziell sein, wenn das erste Gerät kontinuierlich mit dem Kommunikationspartner Informationen zum Ausführen der Aufgabe austauschen muss. Hierdurch wird sichergestellt, dass nicht nur die Kommunikation zum ersten Gerät, sondern auch zum Kommunikationspartner derart von statten geht, dass die Aufgabe derart durchgeführt werden kann, dass der sichere Betrieb des ersten Geräts ermöglicht werden kann. Ferner oder alternativ kann die Messung der realen Übertragungsqualität auch für ein Segment in einer Funkzelle, also richtungsbezogen erfolgen. Dies ist vorteilhaft, weil durch diese Weiterbildung eine exaktere Bestimmung der realen Übertragungsqualität, wie z.B. in einem 45 Grad Segment der Funkzelle, erfolgen kann. Jeder der Schritte zeigt unter anderem Vorteil, dass durch den jeweiligen Schritt der sichere Betrieb des ersten Geräts weiter verbessert werden kann.

In einer vorzugsweisen Alternative der Erfindung, kann die Ersatzaufgabe zumindest durch eine der folgenden Schritte verwirklicht werden:
- ein Betrieb, insbesondere ein Hochfahren oder Starten, des ersten Geräts blockiert wird;
- Ausführen zumindest eines Teils der Aufgabe (AUF), der ohne Berücksichtigung der Information (INF) ausführbar ist;
- das erste Gerät seinen aktuellen Standort derart ändert, dass die reale Übertragungsqualität an dessen neuen Standort zumindest innerhalb des Wertebereichs liegt.

Der jeweilige alternative Schritt für die Ersatzaufgabe zeigt zumindest den Vorteil, dass das erste Gerät in einen sicheren Zustand versetzt oder betrieben werden kann. Ein Blockieren eines Betriebs des ersten Geräts ist vorteilhaft, weil dadurch sichergestellt werden kann, dass die Aufgabe unter den gegebenen Umständen nicht fehlerhaft ausgeführt werden kann. Insbesondere betrifft dies ein Hochfahren oder Starten des ersten Geräts, weil möglicherweise nach dem Hochfahren oder Starten bei Auftreten eines Fehlers beim Durchführen der Aufgabe das erste Gerät nicht mehr angehalten werden kann. So kann z.B. ein Maschinenhochlauf einer als Werkzeugmaschine realisierten ersten Geräts gesperrt werden.

Ist beispielsweise ein Datendurchsatz zum Übertragen der Information mittels des drahtlosen Signals reduziert, so kann die Ersatzaufgabe in vorteilhafter Weise dadurch realisiert werden, dass hierbei zumindest ein Teil der Aufgabe ausgeführt wird, der ohne Berücksichtigung der Information ausführt werden kann. Dies kann dann dazu führen, dass die Ersatzaufgabe ähnlich zur Ausführung der Aufgabe arbeitet, jedoch in einer reduzierten Geschwindigkeit und/oder Genauigkeit gegenüber der Ausführung der Aufgabe. Dies ist vorteilhaft, weil hierdurch das Abarbeiten der Aufgabe nicht vollständig verhindert, sondern nur zeitlich verlangsamt bzw. qualitativ geringwertiger ausgeführt wird. Beispielsweise kennt eine Maschine (= erstes Gerät) die genauen Koordinaten, an denen ein Werkstück bearbeitet werden soll. Umwelteinflüsse, wie Temperatur, Feuchte oder Abnutzung eines Bearbeitungswerkzeugs der Maschine beeinflussen die Bearbeitungsgenauigkeit. Diese werden in Echtzeit durch die Maschine erfasst und als technische Werte an ein zweites Gerät übermittelt. Das zweite Gerät berechnet hieraus Korrekturparameter für die Bearbeitung und sendet diese als Information mittels des drahtlosen Signals an die Maschine, welche diese Information zur Ausführung seiner Aufgabe, d.h. zur Bearbeitung des Werkstücks, einsetzt. Hierdurch kann die Bearbeitung sehr exakt durchgeführt werden. Sollte die reale Übertragungsqualität außerhalb des Wertebereichs liegen so wird die Ersatzaufgabe ausgeführt, bei der das Werkstück ohne die Korrekturparameter bearbeitet wird. Dabei wird die Genauigkeit bei der Bearbeitung des Werkstücks reduziert, weil keine Rücksicht auf die Umwelteinflüsse bei der Bearbeitung genommen werden kann (durch fehlende Korrekturparameter), jedoch kommt die Bearbeitung nicht zum Erliegen.

In einem weiteren alternativen Schritt ändert das erste Gerät seinen aktuellen Standort derart, dass an einem neuen Standort Übertragungsqualität innerhalb des Wertebereichs liegt. So kann beispielsweise ein Transportroboter oder ein führerloses Transportsystem durch Änderung seines Fahrwegs eine sichere Navigation durch die industrielle Anlage gewährleisten. Diese alternative Weiterbildung zeigt im Allgemeinen den Vorteil, dass nach Ausführen der Ersatzaufgabe die eigentliche Aufgabe zeitlich versetzt zur Gewährleistung des sicheren Betriebs des ersten Geräts ermöglicht werden kann.

In einer Weiterbildung der Erfindung kann die Ersatzaufgabe zumindest auch umfassen, dass ein Alarmsignal an ein weiteres Gerät, insbesondere der industriellen Anlage, übermittelt wird. Durch diese Weiterbildung wird in vorteilhafter Weise ermöglicht, dass das weitere Gerät durch das Alarmsignal darüber informiert wird, dass ein sicherer Betrieb zumindest des ersten Geräts in der industriellen Anlage nicht gegeben ist und hieraus für den eigenen Betrieb Maßnahmen, wie ein Durchführen einer eignen Ersatzaufgabe, ableiten kann, um den sicheren Betrieb des weiteren Geräts gewährleisten zu können. Somit ermöglicht diese Weiterbildung, dass nicht nur der sichere Betrieb des ersten Geräts, sondern auch der sichere Betrieb eines oder mehrerer weiterer Geräte der industriellen Anlage ermöglicht wird.

In einer vorzugsweisen Weiterbildung kann die Ersatzaufgabe ferner umfassen, dass das erste Gerät ein weiteres drahtloses Signal aufweisend die Information empfängt, das unter Berücksichtigung der realen Übertragungsqualität des drahtlosen Signals basierend auf dem Alarmsignal, insbesondere durch das weitere Gerät, derart erzeugt ist, dass das erste Gerät die Aufgabe basierend auf der Information, übertragen durch das weitere drahtlose Signal, ausführen oder zumindest in einer reduzierten Geschwindigkeit und/oder Genauigkeit ausführen kann. Hierbei kann durch das Alarmsignal ein Kommunikationspartner, zum Beispiel das weitere Gerät, des ersten Geräts informiert werden, dass die mit dem drahtlosen Signal an das erste Gerät übertragende Information in einer anderen Art und Weise erstellt werden muss, als dies notwendig ist, falls das Alarmsignal nicht empfangen wird. Beispielsweise kann die Information mit einem zusätzlichen Fehler-korrigierenden Code versehen werden, sodass bei einer gestörten Übertragung des drahtlosen Signals, aufweisend diese geänderte Information, die zur Ausführung der Aufgabe benötigte Information durch Fehlerkorrektur rekonstruiert und verwendet werden kann. Hierdurch kann dann auch der Wertebereich derart angepasst werden, dass für spezifisch codierte Informationen des drahtlosen Signals, wie beispielsweise versehen mit einem fehler-korrigierenden Code, eine spätere Ausführung der Aufgabe nach Ausführen der Ersatzaufgabe ermöglicht werden kann. Dies ist vorteilhaft, weil hierdurch der sichere Betrieb des ersten Geräts für einen längeren Zeitraum aufrechterhalten werden kann und somit eine Produktivität des ersten Geräts bzw. industriellen Anlage erhöht werden kann.

In einer alternativen Weiterbildung der Erfindung kann die Ersatzaufgabe ohne Berücksichtigung der Information ausgeführt werden. Diese Weiterbildung ist vorteilhaft, weil ein Betrieb des ersten Geräts auch bei Ausbleiben der Information, übermittelt durch das drahtlose Signal, gewährleistet werden kann. Somit erreicht diese Weiterbildung eine zusätzliche Verbesserung eines sicheren Betriebs des ersten Geräts.

In einer vorzugsweisen Weiterbildung der Erfindung wird die Aufgabe durch ein Transportieren eines Guts, z.B. eines Werkstücks, entlang zumindest eines Teils eines Pfades realisiert, wobei durch die Ersatzaufgabe eine Neuberechnung des Pfads auf Basis der realen Übertragungsqualität in einen neuen Pfad derart vorgenommen wird, dass der neue Pfad durch ein Gebiet führt, in dem die reale Übertragungsqualität zumindest in dem Wertebereich ist. Diese Weiterbildung zeigt den Vorteil, dass bspw. das erste Gerät in Form eines Transportroboters, der einen Gegenstand innerhalb der industriellen Anlage transportiert, sicher seine Aufgabe ausführen kann. Zur Berechnung des neuen Pfads kann der Transportroboter eine Information über die reale Übertragungsqualität von einer Datenbank anfordern. Insbesondere kann der Transportroboter vor Durchführen der Aufgabe anhand der Information über die reale Übertragungsqualität entlang des Pfads entscheiden, ob eine Neuberechnung durch die Ersatzaufgabe notwendig ist, weil Werte der realen Übertragungsqualität nicht innerhalb des Wertebereichs liegen. Somit erreicht diese Weiterbildung eine Verbesserung eines sicheren Betriebs des ersten Geräts.

Das erfindungsgemäße Verfahren zeichnet sich auch dadurch aus, dass Abweichungen von einem durch die Projektierung festgelegten Wertebereichs erkannt werden und hierbei, selbst wenn die Übertragung des drahtlosen Signals als zuverlässig anzusehen wäre, ein Gefahrenpotential für einen sicheren Betrieb des ersten Geräts und ggfs. auch der industriellen Anlage gewährleistet wird. Dieses Gefahrenpotential kann beispielsweise aufgrund einer Cyberattacke auf einzelne Geräte der industriellen Anlage oder auch durch eine unbeabsichtigte Veränderung einer örtlichen Platzierung einzelner Geräte zurückzuführen sein.

Das erfindungsmäße Verfahren kann als Computer-implementiertes Verfahren realisiert werden.

Die Erfindung betrifft ferner ein erstes Gerät zum Bereitstellen eines sicheren Betriebs in einer industriellen Anlage, mit folgenden Einheiten:
- Erste Einheit zum Ermitteln einer realen Übertragungsqualität, die bei einer Übertragung von zumindest einem drahtlosen Signal vorliegt oder zu erwarten ist;
- Zweite Einheit zum Bereitstellen eines Wertebereichs für zumindest eine benötigte Übertragungsqualität bei einer Übertragung des zumindest einen drahtlosen Signals, wobei die zumindest eine benötigte Übertragungsqualität bei der Übertragung des zumindest einen drahtlosen Signals vorliegen muss, damit das erste Gerät eine Aufgabe basierend auf einer Information, die durch das zumindest eine drahtlose Signal übermittelt wird, zuverlässig ausführen kann;
- Dritte Einheit zum Ausführen der Aufgabe basierend auf der Information, falls die reale Übertragungsqualität innerhalb des Wertbereichs liegt, und zum Ausführen einer Ersatzaufgabe, falls die reale Übertragungsqualität außerhalb des Wertbereichs liegt.

In einer Weiterbildung weist das erste Gerät eine vierte Einheit auf, die derart ausgestaltet ist, dass durch die vierte Einheit die Schritte gemäß zumindest einer der obenstehenden Verfahrensschritte implementier- und ausführbar sind.

Das erste Gerät und/oder die Einheiten können in Software, Hardware oder Firmware oder in einer Kombination dieser drei Realisierung implementiert und ausgeführt werden. So können das erste Gerät und seine Einheiten durch einen oder mehr Prozessoren realisiert werden, die einzelne Schritte des Verfahrens als Maschinencode, der auf einem mit dem Prozessor verbunden Speicher gespeichert ist, von dem Speicher lesen und schrittweise verarbeiten. Daneben kann das erste Gerät Eingabeeinheiten und Ausgabeeinheiten aufweisen, die mit dem Prozessor verbunden sind, wobei diese Einheiten eine Kommunikation von dem und zu dem ersten Gerät ermöglichen.

Die Erfindung betrifft ferner ein Computerprogrammprodukt, umfassend Befehle, die bei der Ausführung des Programms durch einen Computer diesen veranlassen, die Schritte des Verfahrens gemäß den obigen Ausführungen auszuführen.

Ferner betrifft die Erfindung ein computerlesbares Speichermedium, umfassend Befehle, die bei der Ausführung durch einen Computer diesen veranlassen, die Schritte des Verfahrens gemäß den obigen Ausführungen auszuführen.

Die Weiterbildungen und die Vorteile des Verfahrens gelten analog für das erste Gerät, das Computerprogrammprodukt und/oder das computerlesbare Speichermedium.

Die vorgenannten Merkmale der Erfindung können auch in einer anderen Art und Weise wie vorstehend dargestellt zur Realisierung der Erfindung Einzelnen und/oder in beliebiger Kombination verwendet werden.

Die Erfindung und ihre Weiterbildungen werden anhand von nachfolgenden Figuren näher exemplarisch erläutert. Im Einzelnen zeigen:
- Figur 1: Ausführungsbeispiel eines ersten Geräts in einer in-dustriellen Anlage
- Figur 2: Erstes Gerät mit Einheiten
- Figur 3: Ablaufdiagramm der Erfindung
- Figur 4: Ausführungsbeispiel anhand eines Transportroboters

Elemente mit gleicher Funktion und Wirkungsweise sind in den Figuren mit denselben Bezugszeichen versehen.

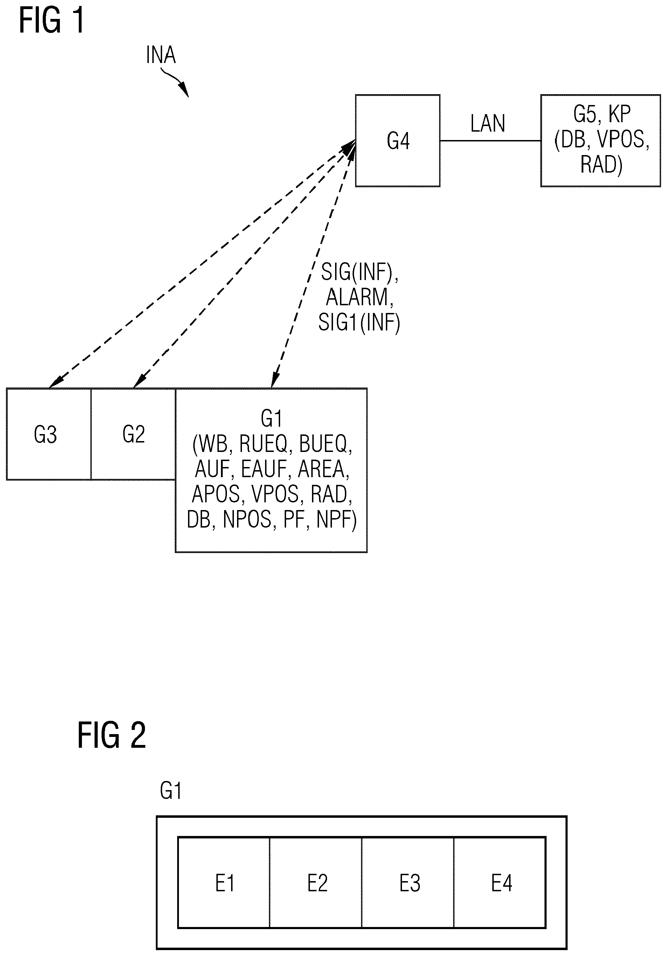

Ein erstes Ausführungsbeispiel der Erfindung gemäß Figur 1 zeigt mehrere Geräte G1,..., G5 einer industriellen Anlage INA. Hierbei handelt es sich um einen Teil einer Produktionsanlage, in der das erste Gerät G1 eine Fräsvorrichtung, das zweite Gerät G2 einen Roboterarm, das dritte Gerät G3 ein Förderband, das vierte Gerät G4 eine Basisstation eines 5G Netzes und das fünfte Gerät G5 eine Recheneinheit in einer Cloud repräsentieren. Ein Werkstück oder ein Gut (nicht gezeichnet) wird zunächst auf dem Förderband transportiert, dann von dem Roboterarm vom Förderband genommen und in eine Haltvorrichtung der Fräsvorrichtung gelegt. Danach wird das Werkstück von der Fräsvorrichtung bearbeitet und nach Abschluss des Fräsvorgangs durch den Roboterarm aus der Haltvorrichtung entnommen und zum Weitertransport auf das Förderband abgelegt. Das erste, zweite und dritte Gerät verfügt jeweils über eine Funkschnittstelle, siehe gestrichelter Doppelpfeil, zum drahtlosen Austausch von Daten zwischen der Basisstation und dem jeweiligen Gerät. Die Basisstation überträgt empfangene Daten des ersten, zweiten oder dritten Geräts über eine LAN-Verbindung LAN (LAN - Local Area Network) zu der Recheneinheit bzw. leitet von der Recheneinheit empfangene Daten über die Luftschnittstelle an das erste, zweite oder dritte Gerät weiter. Die Daten können gemäß einem oder mehreren standardisierten Protokollen aufgebaut sein, beispielweise nach IP (IP = Internet Protocol) und UDP (UDP = User Datagram Protocol), und hiermit eine jeweilige Information INF als Payload übertragen. Ebenso kann als Protokoll OPC UA (OPC UA = Open Platform Communications Unified Architecture) oder OPC UA FLC (OPC UA FLC = Open Platform Communications Unified Architecture Field Level Communication) oder ein Publish-Subscribe-Protokoll verwendet werden.

Die Fräsvorrichtung G1 empfängt von der Recheneinheit G5 ein drahtloses Signal SIG, welches die Information INF aufweist. Diese Information benötigt die Fräsvorrichtung, um ihren Fräskopf entsprechend der empfangenen Information zu steuern. Das Durchführen des Fräsens repräsentiert die Aufgabe AUF, die die Fräsvorrichtung basierend auf der Information ausführen soll. Die Recheneinheit erzeugt in Echtzeit und kontinuierlich diese Information für die Fräsvorrichtung und überträgt diese Information über die Basisstation G4 zu der Fräsvorrichtung G1. Jedoch darf diese Information aufgrund einer schlechten Übertragungsqualität des drahtlosen Signals nicht verfälscht oder gestört sein. Daher ermittelt das erste Gerät eine reale Übertragungsqualität RUEQ des empfangenen drahtlosen Signals SIG, beispielsweise die Signalstärke des empfangenen drahtlosen Signals beträgt -78dBm.

Die Fräsvorrichtung hat lokalen Zugriff auf einen Wertebereich WB, der angibt, welche benötigte Übertragungsqualität BUEQ bei einer Übertragung des drahtlosen Signals vorliegen muss, damit die Information, übertragen mittels des drahtlosen Signals, für das Ausführen der Aufgabe der Fräsvorrichtung genutzt werden kann. Der Wertebereich für das Beispiel Signalstärke des empfangenen drahtlosen Signals ist: -75dBm > WB > -78dBm. Das bedeutet, wenn das empfangene drahtlose Signal die reale Übertragungsqualität, gemessen als Signalstärke, zwischen -75 dBm und -87 dBm aufweist, dann kann die Information des empfangenen Signals zur Ausführung der Aufgabe genutzt werden. Im vorliegenden Beispiel liegt die Signalstärke innerhalb des Wertebereichs, sodass die Aufgabe ausgeführt werden kann

Liegt die reale Übertragungsqualität jedoch außerhalb des Wertebereichs WB, so führt die Fräsvorrichtung anstelle der Aufgabe AUF eine Ersatzaufgabe EAUF aus. Im vorliegenden Beispiel würde die Fräsvorrichtung den Fräskopf in eine Position bewegen, in der weder das Werkstück noch der Fräskopf beschädigt wird und der Fräsvorgang zu einem späteren Zeitpunkt fortgesetzt werden kann.

Der Wertebereich WB wurde beispielweise während einer Projektierungsphase der industriellen Anlage als typisch zu erwartende reale Übertragungsqualität des drahtlosen Signals ermittelt. Physikalisch bedingt unterliegt ein drahtloses Signal Schwankungen zum Beispiel in der Signalstärke, wobei aufgrund einer Anordnung der Geräte der industriellen Anlage ermittelt werden kann, welche realen Übertragungsqualitäten im Betrieb der industriellen Anlage zu erwarten sind. Diese zu erwartenden realen Übertragungsqualitäten werden als benötigte Übertragungsqualitäten bezeichnet und werden durch den Wertebereich spezifiziert. So kann der Wertebereich zum einen eine Mindestqualität der reale Übergangsqualität fordern, damit das drahtlose Signal zuverlässig empfangen und die Aufgabe zuverlässig auf Basis der Information des drahtlosen Signals zuverlässig ausgeführt werden kann. Jedoch kann der Wertebereich auch besonders gute reale Übertragungsqualitäten ausschließen, weil durch die Anordnung der Geräte der industriellen Anlage diese besonders guten realen Übertragungsqualitäten nicht auftreten können. Somit kann der Wertebereich auch dahingehend verstanden werden, dass dieser die reale Übertragungsqualität zum Zeitpunkt der Projektierung und/oder der Inbetriebnahme der industriellen Anlage repräsentiert, wobei ein Wert der realen Übertragungsqualität, der außerhalb des Wertebereichs liegt beispielweise eine unerwartete Veränderung einer Anordnung zumindest einiger der Geräte der industriellen Anlage repräsentiert und somit nicht dem erwarteten Betrieb der industriellen Anlage entspricht.

Neben einer Ermittlung der realen Übertragungsqualität eines übertragenen drahtlosen Signals kann die Fräsvorrichtung auch ermitteln, welche reale Übertragungsqualität für ein in der Zukunft zu übertragendes bzw. zu empfangendes drahtloses Signal zu erwarten ist. Beispielsweise wird als reale Übertragungsqualität ein Verzögerungswert einer Datenübertragung (= Delay) zu 0,5 ms bestimmt. Der Wertebereich gibt die benötigte Übertragungsqualität wie folgt an: 0,1 ms < WB < 0,3 ms. Somit erkennt die Fräsvorrichtung bereits vor Empfang des drahtlosen Signals, dass das dazu empfangene drahtlose Signal nicht der benötigten Übertragungsqualität entsprechen wird, weil die Verzögerung 0,5ms außerhalb des Werteberichs liegt. Daher führt die Fräsvorrichtung die Ersatzaufgabe aus. Beispielsweise kann die Aufgabe im Hochlauf der Fräsmaschine bezüglich eines neuen Fräsgangs bestehen. Die Ersatzaufgabe besteht in einem Verhindern des Hochlaufens durch Abwarten und Ermitteln der realen Übertragungsqualität für zukünftig zu empfangende drahtlose Signale.

Selbst wenn das erste Gerät, z.B. durch eine Notabschaltung, auf eine tatsächlich unzureichende oder unterbrochene Drahtlosverbindung reagieren kann, so kann durch die Erfindung vermieden werden, dass es zu einer solchen Reaktion tatsächlich kommt, da bereits vorausschauend überwacht wird, ob eine für einen sicheren, zuverlässigen Betrieb erwartete reale Übertragungsqualität vorliegt. Dadurch kann weiterhin ein regulärer Betrieb des ersten Geräts einschließlich der Durchführung der Aufgabe vermieden werden, wenn sich die reale Übertragungsqualität der Drahtlosverbindung nicht in dem Wertebereich der erwarteten regulären, guten, d.h. benötigten, Übertragungsqualität befindet oder wenn dieser Wertebereich sich in der Nähe eines Grenzbereichs befindet. So kann verlässlich die Ersatzaufgabe durch das erste Gerät durchgeführt werden, bevor es zu einer tatsächlichen Unterschreitung der Mindestanforderungen, d.h. die reale Übertragungsqualität liegt außerhalb des Wertebereichs, kommt. Dabei ist es möglich, eine Überwachung der realen Übertragungsqualität sowohl vor Durchführung der Aufgabe überprüfbar, wie auch während der Durchführung der Aufgabe. Wenn eine Abweichung vor Durchführung der Aufgabe erkannt wird, so wird die Ersatzaufgabe durchgeführt. Wenn eine Abweichung während der Durchführung der Aufgabe erkannt wird, kann die Ausführung der Aufgabe abgebrochen oder unterbrochen, oder es kann eine weitere Ersatzaufgabe durchgeführt werden. Für die Überprüfung der aktuellen realen Übertragungsqualität vor Durchführung der Aufgabe kann ein Wertebereich herangezogen werden, der enger ist als ein weiterer Wertebereich, der bei der Prüfung der Übertragungsqualität während der Durchführung der Aufgabe herangezogen wird.

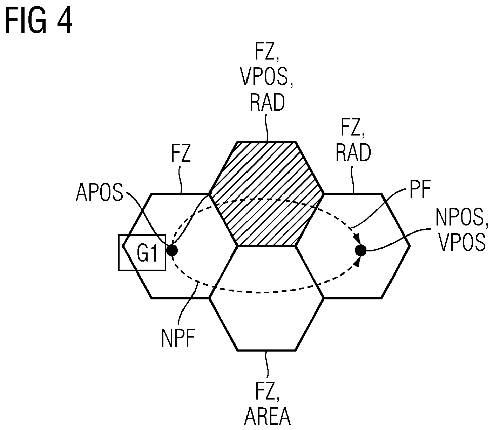

In einem zweiten Ausführungsbeispiel, siehe auch Figur 4, der Erfindung ist das erste Gerät G1 ein Transportroboter, der ein Werkstück von einer ersten Werkshalle in eine zweite Werkshalle transportiert. Auf dem Weg, auch als Pfad PF bezeichnet, von der einen zur zweiten Werkshalle durchfährt der Transportroboter mehrere kleine Funkzellen. Zur genauen Positionsbestimmung nutzt der Transportroboter eine Information INF, die eine Basisstation der jeweiligen Funkzelle FZ in regelmäßigen kurzen Abständen auf Basis eines drahtlosen Signals übermittelt. Um den Weg ordnungsgemäß abfahren zu können, muss jede der Funkzellen entlang des Pfads jeweils eine benötigte Übertragungsqualität aufweisen. Bevor der Transportroboter von einer Funkzelle in die nächste Funkzelle fährt, frägt er von der Recheneinheit G5 die in der nächsten Funkzellen zu erwartende reale Übertragungsqualität an einem vorgebbaren Standort VPOS oder in einem Bereich RAD des vorgebbaren Standorts ab. Der vorgebbare Standort oder Bereich ist in diesem Beispiel die nächste Funkzelle. Die Recheneinheit ermittelt diese zu erwartende reale Übertragungsqualität aus einer Datenbank DB und überträgt diese in einem weiteren drahtlosen Signal an das erste Gerät. Dieses vergleicht nach Empfang die zu erwartende reale Übertragungsqualität mit dem Wertebereich der benötigten Übertragungsqualität. Liegt die zu erwartende reale Übertragungsqualität außerhalb des Wertebereichs, so meidet der Transportroboter diese nächste Funkzelle. In diesem Fall ermittelt der Transportroboter einen neuen Pfad NPF von seiner aktuellen Position APOS zur zweiten Werkshalle, wobei er den neuen Pfad derart wählt, dass der neue Pfad durch ein Gebiet AREA führt, in dem die reale Übertragungsqualität zumindest in dem Wertebereich liegt.

In dem zweiten Ausführungsbeispiel besteht die Aufgabe des Transportroboters in dem Transport des Werkstücks und die Ersatzaufgabe in der Ermittlung des neuen Pfads, falls die nächste zu durchfahrende Funkzelle aufgrund der zu erwartenden realen Übertragungsqualität nicht durchfahren werden darf. In einer Ergänzung dieses zweiten Ausführungsbeispiels kann der Transportroboter kontinuierlich seine reale Übertragungsqualität der von ihm empfangenen drahtlosen Signale messen und die gemessene reale Übertragungsqualität der Rechnervorrichtung übermitteln. Die Rechnervorrichtung speichert die gemessene reale Übertragungsqualität in einer Datenbank zusammen mit einer Ortsposition, an der die gemessene reale Empfangsqualität ermittelt wurde. Hierdurch kann für ein oder mehrere Gebiete der industriellen Anlage eine Karte mit zu erwartenden realen Übergangsqualitäten erstellt werden, die auch von Zeit zu Zeit aktualisiert werden kann.

In einer Erweiterung eines der Ausführungsbeispiele kann der Transportroboter oder die Fräsvorrichtung ein weiteres Gerät, wie bspw. die Basisstation G4 oder die Recheneinheit G5, über die gemessene reale Übertragungsqualität eines empfangenen drahtlosen Signals mittels eines Alarmsignals ALARM informieren, falls der Wert der realen Übertragungsqualität außerhalb des Wertebereichs liegt. Hierdurch kann die Basisstation die Übertragungsart, beispielsweise eine Modulationsart oder einen Fehler-korrigierenden Code, derart verändern, dass zukünftige Übertragungen des drahtlosen Signals durch die Fräsvorrichtung derart empfangen werden können, dass die reale Übertragungsqualität innerhalb des Wertebereichs liegt.

In einem weiteren Ausführungsbeispiel gibt es in der industriellen Anlage zumindest teilweise zwei oder mehrere Funknetze, die beispielsweise mittels unterschiedlicher Technologien realisiert sind, wie beispielsweise WLAN (WLAN - Wireless LAN) oder 5G. Das erste Gerät kann für jedes der Netze einen eigenen Datensatz an Wertebereiche aufweisen, die für das jeweilige Netz, insbesondere an einer örtlichen Position, anzeigen, in welchem Wertebereich die Werte für jeweils zumindest eine benötigte Übertragungsqualität vorliegen müssen. Falls der Wert der realen Übertragungsqualität außerhalb des Wertebereichs liegt, kann die Ersatzaufgabe zusätzlich zum Bewirken eines sicheren Betriebs des ersten Geräts auch prüfen, ob ein Wert der realen Übertragungsqualität in einem der weiteren Funknetze innerhalb des für das weitere Funknetz gültigen Wertebereichs vorliegt. Falls diese Prüfung positiv ist, kann im Rahmen der Ersatzaufgabe ein Wechsel des Übertragungsstandards, beispielsweise von 5G auf WLAN erfolgen, sodass im zeitlichen Anschluss das erste Gerät seine Information zur Durchführung der Aufgabe über ein drahtloses Signal des weiteren Funknetzes erhält.

Figur 2 zeigt in einem weiteren Ausführungsbeispiel das erste Gerät G1 mit mehreren Einheiten E1, ..., E4. Die erste Einheit E1 ist zum Ermitteln einer realen Übertragungsqualität ausgebildet. Die zweite Einheit E2 stellt den Wertebereich für zumindest die benötigte Übertragungsqualität bei der Übertragung des zumindest einen drahtlosen Signals bereit und prüft, ob der Wert der realen Übertragungsqualität innerhalb des Wertebereichs liegt. Die dritte Einheit E3 ist derart ausgebildet, dass diese die Aufgabe und/oder die Ersatzaufgabe ausführen kann, in Abhängigkeit von dem Prüfvorgang der zweiten Einheit. Ferner weist das erste Gerät noch eine vierte Einheit E4 auf, mithilfe derer Weiterbildungen der Erfindung implementierbar und ausführbar sind.

Die Einheiten können zumindest teilweise in Software, Hardware, Firmware oder in einer Kombination aus Software, Hardware und Firmware realisiert und ausgeführt werden. So können einzelne Schritte der Erfindung als Softwarecode, insbesondere codiert als maschinenlesbarer Code oder Microcode, in einem Speicher abgelegt sein, der mittels eines Prozessors auslesbar ist. Der Prozessor arbeitet den Softwarecode schrittweise ab. Neben dem Speicher können noch Ein- und Ausgabeeinheiten mit dem Prozessor und/oder dem Speicher verbunden sein, damit Daten, wie das drahtlose Signal oder das Alarmsignal, mit anderen Geräten der industriellen Anlage ausgetauscht werden können.

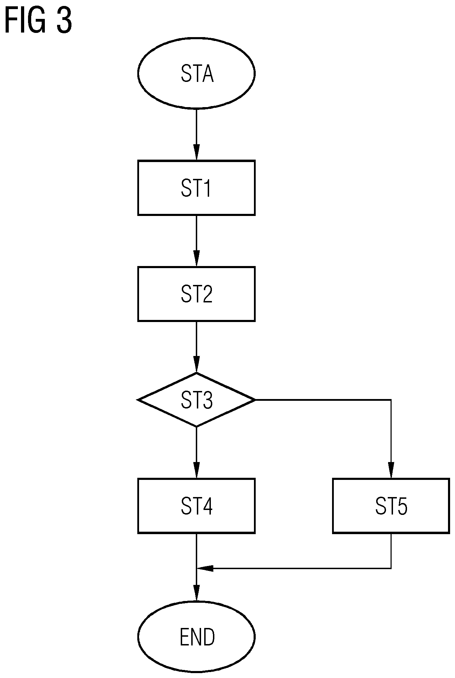

Figur 3 zeigt ein Ablaufdiagramm des erfinderischen Verfahrens. Dabei werden folgende Schritte nacheinander durchlaufen:
- STA: im Zustand Start STA startet das Ablaufdiagramm;
- ST1: im ersten Schritt ST1 wird die reale Übertragungsqualität ermittelt, die bei einer Übertragung von zumindest einem drahtlosen Signal vorliegt oder zu erwarten ist;
- ST2: im zweiten Schritt ST2 wird ein Wertebereich für zumindest eine benötigte Übertragungsqualität bei einer Übertragung des zumindest einen drahtlosen Signals bereitgestellt, wobei die zumindest eine benötigte Übertragungsqualität bei der Übertragung des zumindest einen drahtlosen Signals vorliegen muss, damit das erste Gerät die Aufgabe basierend auf einer Information, die durch das zumindest eine drahtlose Signal übermittelt wird, zuverlässig ausführen kann;
- ST3: im dritten Schritt ST3 wird geprüft, ob die reale Übertragungsqualität innerhalb des Wertebereichs liegt; falls die reale Übertragungsqualität innerhalb des Wertebereichs liegt wird nachfolgend ein vierter Schritt ansonsten ein fünfter Schritt durchlaufen;
- ST4: im vierten Schritt ST4 wird die Aufgabe basierend auf der Information ausgeführt wird;
- ST5: im fünften Schritt ST5 wird eine Ersatzaufgabe ausgeführt, falls die reale Übertragungsqualität außerhalb des Wertebereichs liegt;
- END: das Ablaufdiagramm wird im Zustand END beendet.

Die vorstehenden Ausführungsbeispiele können zumindest teilweise kombiniert werden. Auch stellt die Darstellung der Erfindung anhand konkreter Geräte, wie der Fräsvorrichtung, oder dem verwendeten Übertragungsstandard 5G zur Übertragung des drahtlosen Signals lediglich eine beispielhafte Implementierung dar und ist somit nicht abschließend und einschränkend für den Schutzumfang der Erfindung zu verstehen.

### Literatur

[1] 3GPP TR 33.857 " Study on enhanced security support for Non-Public Networks (NPN) ", siehe http://www.3gpp.org
[2] 3GPP TR 23.700-07 "Study on enhanced support of Non-Public Networks (NPN)", siehe http://www.3gpp.org
[3] "Anlage (Technik)", siehe https://de.wikipedia.org/wiki/Anlage_(Technik)

## Patentansprüche

1. Verfahren für einen sicheren Betrieb eines ersten Geräts (G1) in einer industriellen Anlage (INA),
mit folgenden Schritten:
- Ermitteln einer realen Übertragungsqualität (RUEQ), die bei einer Übertragung von zumindest einem drahtlosen Signal (SIG) vorliegt oder zu erwarten ist;
- Bereitstellen eines Wertebereichs (WB) für zumindest eine benötigte Übertragungsqualität (BUEQ) bei einer Übertragung des zumindest einen drahtlosen Signals (SIG), wobei die zumindest eine benötigte Übertragungsqualität (BUEQ) bei der Übertragung des zumindest einen drahtlosen Signals (SIG) vorliegen muss, damit das erste Gerät (G1) eine Aufgabe (AUF) basierend auf einer Information (INF), die durch das zumindest eine drahtlose Signal (SIG) übermittelt wird, zuverlässig ausführen kann;
- Ausführen der Aufgabe (AUF) basierend auf der Information (INF), falls die reale Übertragungsqualität (RUEQ) innerhalb des Wertbereichs (WB) liegt;
- Ausführen einer Ersatzaufgabe (EAUF), falls die reale Übertragungsqualität (RUEQ) außerhalb des Wertbereichs (WB) liegt.

2. Verfahren nach Anspruch 1,
bei dem die reale Übertragungsqualität (RUEQ) und die benötigte Übertragungsqualität (RUEQ) abhängig von zumindest einem der folgenden Parameter gebildet wird:
- Datendurchsatz bei der Übertragung der Information (INF) ;
- Übertragungsverzögerung zur Übertragung der Information (INF) ;
- Jitter bei der Übertragung der Information (INF);
- Signalstärke, Signalform oder Frequenzspektrum des drahtlosen Signals (SIG), welches bei einem Empfänger, insbesondere bei dem ersten Gerät (G1) oder bei dem Kommunikationspartner des ersten Geräts (G1), vorliegt;
- Störsignalanteil, insbesondere charakterisiert durch seine Signalstärke, Frequenzband und/oder zeitliche und spektrale Ausformung.

3. Verfahren nach einem der vorhergehenden Ansprüche,
bei dem die reale Übertragungsqualität (RUEQ) für ein Gebiet (AREA) ermittelt und/oder die zumindest eine benötigte Übertragungsqualität (BUEQ) für ein Gebiet (AREA) bereitgestellt werden.

4. Verfahren nach einem der vorhergehenden Ansprüche,
bei dem das Ermitteln der realen Übertragungsqualität (RUEQ) durch zumindest eine der folgenden Schritte durchgeführt wird:
- durch eine Messung des ersten Geräts (G1) an seinem aktuellen Standort (APOS);
- durch Abfragen der realen Übertragungsqualität (RUEQ) an einem vorgebbaren Standort (VPOS) oder in einem Bereich (RAD) eines vorgebbaren Standorts (VPOS) aus einer Datenbank (DB);
- durch Abfragen der realen Übertragungsqualität (RUEQ) eines Kommunikationspartners (KP) des ersten Geräts (G1) ;
- durch eine Messung des ersten Geräts (G1) in einem Segment eines Funkzelle.

5. Verfahren nach einem der vorhergehenden Ansprüche,
bei dem die Ersatzaufgabe (EAUF) zumindest durch einen der folgenden Schritte verwirklicht wird:
- ein Betrieb, insbesondere ein Hochfahren oder Starten, des ersten Geräts (G1) blockiert wird;
- Ausführen zumindest eines Teils der Aufgabe (AUF), der ohne Berücksichtigung der Information (INF) ausführbar ist;
- das erste Gerät (G1) seinen aktuellen Standort (APOS) derart ändert, dass die reale Übertragungsqualität (RUEQ) an dessen neuen Standort (NPOS) zumindest innerhalb Wertebereichs (WB) liegt.

6. Verfahren nach einem der vorhergehenden Ansprüche,
bei dem die Ersatzaufgabe (EAUF) zumindest auch umfasst, dass ein Alarmsignal (ALARM) an ein weiteres Gerät (G5), insbesondere der industriellen Anlage (INA), übermittelt wird.

7. Verfahren nach Anspruch 6,
bei dem die Ersatzaufgabe (EAUF) ferner umfasst, dass das erste Gerät (G1) ein weiteres drahtloses Signal (SIG1) aufweisend die Information (INF) empfängt, das unter Berücksichtigung der realen Übertragungsqualität (RUEQ) des drahtlosen Signals (SIG) basierend auf dem Alarmsignal (ALARM), insbesondere durch das weitere Gerät (G5), derart erzeugt ist, dass das erste Gerät (G1) die Aufgabe (AUF) basierend auf der Information (INF), übertragen durch das weitere drahtlose Signal (SIG1), ausführen oder zumindest in einer reduzierten Geschwindigkeit und/oder Genauigkeit ausführen kann.

8. Verfahren nach einem der vorhergehenden Ansprüche,
bei dem die Ersatzaufgabe (EAUF) ohne Berücksichtigung der Information (INF) ausgeführt wird.

9. Verfahren nach einem der vorhergehenden Ansprüche,
bei dem die Aufgabe (AUF) durch ein Transportieren eines Guts entlang zumindest eines Teils eines Pfades (PF) realisiert wird, wobei durch die Ersatzaufgabe (EAUF) eine Neuberechnung des Pfads (PF) auf Basis der realen Übertragungsqualität (RUEQ) in einen neuen Pfad (NPF) derart vorgenommen wird, dass der neue Pfad (NPF) durch ein Gebiet (AREA) führt, in dem die reale Übertragungsqualität (RUEQ) zumindest in dem Wertebereich (WB) ist.

10. Erstes Gerät (G1) zum Bereitstellen eines sicheren Betriebs in einer industriellen Anlage (INA),
mit folgenden Einheiten:
- Erste Einheit (E1) zum Ermitteln einer realen Übertragungsqualität (RUEQ), die bei einer Übertragung von zumindest einem drahtlosen Signal (SIG) vorliegt oder zu erwarten ist;
- Zweite Einheit (E2) zum Bereitstellen eines Wertebereichs (WB) für zumindest eine benötigte Übertragungsqualität (BUEQ) bei einer Übertragung des zumindest einen drahtlosen Signals (SIG), wobei die zumindest eine benötigte Übertragungsqualität (BUEQ) bei der Übertragung des zumindest einen drahtlosen Signals (SIG) vorliegen muss, damit das erste Gerät (G1) eine Aufgabe (AUF) basierend auf einer Information (INF), die durch das zumindest eine drahtlose Signal (SIG) übermittelt wird, zuverlässig ausführen kann;
- Dritte Einheit (E3) zum Ausführen der Aufgabe (AUF) basierend auf der Information (INF), falls die reale Übertragungsqualität (RUEQ) innerhalb des Wertbereichs (WB) liegt, und zum Ausführen einer Ersatzaufgabe (EAUF), falls die reale Übertragungsqualität (RUEQ) außerhalb des Wertbereichs (WB) liegt.

11. Erstes Gerät (G1) gemäß Anspruch 10, bei dem Das erste Gerät eine vierte Einheit (E4) aufweist, die derart ausgestaltet ist, dass durch die vierte Einheit (E4) die Schritte gemäß zumindest einer der Ansprüche 2 bis 9 implementier- und ausführbar sind.

12. Computerprogrammprodukt, umfassend Befehle, die bei der Ausführung des Programms durch einen Computer diesen veranlassen, die Schritte des Verfahrens nach einem der Ansprüche 1 bis 9 auszuführen.

13. Computerlesbares Speichermedium, umfassend Befehle, die bei der Ausführung durch einen Computer diesen veranlassen, die Schritte des Verfahrens nach einem der Ansprüche 1 bis 9 auszuführen.
